# EUROPÄISCHE PATENTSCHRIFT

(11) **EP 2 360 363 B1**
(45) Veröffentlichungstag und Bekanntmachung des Hinweises auf die Patenterteilung: **12.08.2015**
(21) Anmeldenummer: 11153224.8
(22) Anmeldetag: 03.02.2011
(51) Int. Cl.: F02B 37/18, F15B 15/00, F02B 37/24, F15B 15/10

(54) **Aktuator**
Actuator
Actuateur

(30) Priorität: 13.02.2010 DE 102010007895
(43) Veröffentlichungstag der Anmeldung: 24.08.2011
(73) Patentinhaber: Bosch Mahle Turbo Systems GmbH & Co. KG, 70376 Stuttgart (DE)
(72) Erfinder: Jennes, Jörg, 67278 Beckenheim (DE); Naunheim, Dirk, 70176 Stuttgart (DE); Schäflein, Jochen, 70327 Stuttgart (DE); Dettmann, Tobias, 19303 Rüterberg (DE); Bedö, Stefan, 70197 Stuttgart (DE); Czerwinski, Klaus, 71296 Heimsheim (DE)
(74) Vertreter: BRP Renaud & Partner mbB Rechtsanwälte Patentanwälte Steuerberater

(56) Entgegenhaltungen:
- DE-U1-202005 017 296
- GB-A- 969 451
- US-A- 3 195 805
- US-A- 6 062 124

## Beschreibung

Die vorliegende Erfindung betrifft einen Aktuator, insbesondere einen pneumatischen Aktuator, zur Regelung einer variablen Turbinengeometrie eines Abgasturboladers, mit den Merkmalen des Oberbegriffs des Anspruchs 1.

Aus der US 4,403,538 ist ein pneumatischer Aktuator zur Verwendung an einem Abgasturbolader bekannt. Der pneumatische Aktuator weist eine in einem Gehäuse angeordnete, das Gehäuse in zwei voneinander getrennte Bereiche aufteilende Membran auf, die mit einer Übertragungsstange verbunden ist. Durch Druckunterschiede zwischen den Bereichen des pneumatischen Aktuators wird aufgrund der Bewegung der Membran die Übertragungsstange translatorisch bewegt. Zur Führung der Übertragungsstange ist dieselbe in einer in dem Gehäuse angeordneten Führungsbuchse gelagert. Ein solcher pneumatischer Aktuator wird zur Steuerung z. Bsp. eines Wastegate-Ventils des Abgasturboladers verwendet.

In der US 6,352,019 B1 ist ebenfalls ein ähnlicher pneumatischer Aktuator beschrieben, wobei diese Ausführungsform eine Führungsbuchse aufweist, deren dem Übertragungselement zugewandte Innenoberfläche zur Verringerung der Reibung zwischen der Führungsbuchse und dem Übertragungselement eine abgerundete Form aufweist. Dadurch ist die Reibungsfläche zwischen der Übertragungsstange und der Führungsbuchse verringert.

Die vorliegende Erfindung beschäftigt sich mit dem Problem, für einen solchen gattungsgemäßen Aktuator eine verbesserte oder zumindest eine andere Ausführungsform anzugeben, die sich insbesondere durch eine verringerte Reibung zwischen Übertragungselement und Führungselement auszeichnet. Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem Aktuator, insbesondere bei einem pneumatischen Aktuator zur Regelung einer variablen Turbinengeometrie und/oder eines Wastegateventils eines Abgasturboladers, mit einem Übertragungselement zur Übertragung eines mechanischen Regelsignals und einem das Übertragungselement lagernden Führungselement, eine dem Führungselement zugewandte Außenoberfläche des Übertragungselements mit zumindest einer Radialnut auszustatten. Durch Ausbildung einer solchen Radialnut ist eine Kontaktfläche zwischen dem Übertragungselement und dem Führungselement verkleinert und somit auch die bei einem angenommenen gleichbleibenden Anpressdruck auftretende Reibung. Zudem kann bei Ausbildung von zumindest einer solchen Radialnut die durch das Führungselement definierte Führungslänge beibehalten werden unter Verringerung der Berührungsfläche und der damit einhergehenden Reibung zwischen Führungselement und Übertragungselement.

Dieses Prinzip der Reibungsverringerung kann bei sämtlichen Aktuatoren angewendet werden, bei denen eine Eingangsgröße in eine Bewegung umgewandelt wird, wobei die durch den Aktuator erzeugte Bewegung durch ein Übertragungselement, wie z. Bsp. eine Regelstange, auf eine weitere Komponente übertragen wird. Zweckmäßigerweise ist dabei das Übertragungselement in einem Führungselement gegen Querbewegungen zur Längsachse des Übertragungselements gesichert. Bevorzugt wird eine solche Übertragungselement-Führungselement-Kombination bei pneumatischen Aktuatoren eingesetzt. Bei diesen bevorzugt verwendeten pneumatischen Aktuatoren ist eine Membran innerhalb eines druckdichten Gehäuses so angeordnet, dass das Gehäuse durch die Membran in zwei druckdicht voneinander getrennte Bereiche unterteilt wird. Aufgrund von Druckunterschieden in diesen beiden getrennten Bereichen bewegen sich die Membran und ein mit der Membran verbundenes Übertragungselement, das die Membranbewegung auf eine weitere Komponente übertragen kann. Das Übertragungselement des Aktuators kann als Stab bzw. als Regelstab ausgebildet sein. Dabei ist als Querschnitt des Stabs sowohl eine runde als auch eine eckige Form denkbar. Im Falle eines pneumatischen Aktuators überträgt das Übertragungselement eine durch die Membran ausgelöste Translation in Orientierung der Längsachse des Übertragungselements. Es ist aber auch denkbar, bei einer anderen Form des Aktuators mittels des Übertragungselements eine Rotationsbewegung zu übertragen. Im Falle der Übertragung einer Rotation ist das Übertragungselement im Wesentlichen rund auszubilden.

Zweckmäßigerweise ist eine Innenkontur des Führungselements im Wesentlichen komplementär zu der wesentlichen Querschnittsform des Übertragungselements ausgebildet. Das Führungselement, insbesondere bei einem pneumatischen Aktuator, hat zum einen die Funktion, die Position des Übertragungselementes zu definieren, was vor allem hinsichtlich einer genauen Positionserkennung durch einen ggf. in dem Aktuator angeordneten Sensor, insbesondere Positionssensor, vorteilhaft ist. Zudem wird durch das Verwenden eines Führungselements eine die Bewegung erzeugende Baugruppe des Aktuators weniger stark durch Querkräfte beaufschlagt, die quer zur Längsrichtung des Übertragungselementes auf dasselbe einwirken. Dies bringt eine Erhöhung der Lebensdauer des Aktuators mit sich. Zum anderen dichtet das Führungselement den inneren Bereich des Aktuators gegenüber der Umwelt ab, so dass ein lebenszeitverringernder Schmutzeintrag von außen in das Innere des Aktuators verringert bzw. verhindert wird.

Als Materialien für das Übertragungselement und/oder das Führungselement können Metalle, Metalllegierungen und Kunststoffe zum Einsatz kommen. So ist es in der Regel vorteilhaft, Führungselemente aus PPS zu fertigen.

Um eine ausreichende Führung des Übertragungselements durch das Führungselement zu gewährleisten, ist eine gewisse Führungslänge notwendig. Als Führungslänge wird dabei die Länge des Übertragungselementbereichs bezeichnet, die jeweils in dem Führungselement angeordnet ist. In diesem Bereich des Übertragungselements berühren eine dem Übertragungselement zugewandte Innenoberfläche des Führungselements und eine dem Führungselement zugewandte Außenoberfläche des Übertragungselements einander. Durch diese Berührungsfläche entsteht ein am Übertragungselement angreifende Reibungskraft, die der Bewegung des Übertragungselements entgegenwirkt. Wesentlicher Nachteil dieser Reibung zwischen Übertragungselement und Führungselement ist die aufgrund der Reibungskraft eintretende Hysterese des Aktuators. Durch den aufgrund der Hysterese verursachten Positionsunterschied zwischen Hin- und Rückbewegung des Übertragungselements ist die durch den Aktuator mögliche Feinheit der Regelung begrenzt. Eine Verringerung der Reibung führt demgemäß unter anderem zu einer Verbesserung der Regelungsgüte des Aktuators.

Durch Radialnuten, die an der dem Übertragungselement zugewandten Innenoberfläche des Führungselements und/oder an der dem Führungselement zugewandten Außenoberfläche des Übertragungselements ausgebildet werden, gelingt es die Reibungsfläche zu verringern. Dabei erstrecken sich die Radialnuten von der dem Übertragungselement zugewandten Innenoberfläche des Führungselements bzw. von der dem Führungselement zugewandten Außenoberfläche des Übertragungselements in das jeweilige Element hinein. Dabei können solche Radialnuten in unterschiedlicher Tiefe bzw. Erstreckung in das Element hinein ausgebildet werden. Solche Radialnuten können als in Umfangsrichtung des jeweiligen Elements verlaufende Ringnuten oder als in Axialrichtung des jeweiligen Elementes verlaufende Längsnuten ausgebildet werden. Sowohl an dem Übertragungselement als auch an dem Führungselement können jeweils nur Längsnuten, nur Ringnuten oder jeweils an einem Element einander kreuzende Längs- und Ringnuten ausgebildet werden.

Ebenfalls denkbar ist es, an dem Übertragungselement und/oder an dem Führungselement zumindest eine Spiralnut, die in einem Winkel zur Längsachse verläuft, auszubilden. Spiralnuten können als gewindeförmige, beidseitig offene Ringnuten ausgebildet sein, wobei die Steigung einer solchen gewindeförmigen Spiralnut variierbar ausgebildet sein kann, ebenso wie die Anzahl der ausgebildeten Spiralwindungen.

Vorteilhaft an der Ausbildung von zumindest einer Ringnut im Führungselement kann die Beibehaltung der Führungslänge bei gleichzeitiger Verringerung der Reibungsfläche sein. Im Falle der Ausbildung zumindest einer Ringnut an der Innenoberfläche des Führungselements kann durch Ausbildung endständiger Ringstege die Führungslänge ebenso beibehalten werden, wie durch Ausbildung von Längsnuten. Durch Beibehaltung der Führungslänge sind die durch das Übertragungselement übertragbaren an dem Übertragungselement ggf. auftretenden Querkräfte verringert, was zu einer Erhöhung der Lebensdauer des Aktuators führt.

Die Radialnuten können einen im Wesentlichen rechteckigen, dreieckigen oder trapezförmigen Querschnitt aufweisen. Mehrere, die Radialnuten begrenzende Stege, die aufgrund der Ausbildung der Radialnuten entstehen, können einen abgerundeten, einen trapezförmigen, einen rechteckigen oder einen spitz zulaufenden Endbereich aufweisen.

Die Hysterese bezüglich einer Hin- und Rückbewegung des Übertragungselementes auf Grund der Reibung zwischen Übertragungselement und Führungselement kann zusätzlich oder alternativ auch mit einer schmierenden Beschichtung aufgrund der Reduktion der Reibung durch die Schmierung dieser Beschichtung verbessert werden. So ist es möglich, eine Beschichtung des als z. B. Regelstange ausgebildeten Übertragungselementes mit z. B. einer Teflonschicht, einer MoS₂-Schicht einer Chromschicht oder dergleichen zu versehen. Dabei können solche schmierenden Beschichtungen sowohl auf der gesamten Regelstange als auch partiell im Bereich des Führungselementes und in einem Hubbereich des Übertragungselements während des Betriebs aufgetragen werden.

Des Weiteren ist es denkbar, das Führungselement im Gegensatz zu einer derzeit üblichen Ausbildung aus PPS vollständig oder zumindest im Führungsbereich aus Teflon herzustellen, was ebenso zu einer deutlichen Reduzierung der Reibung führt. Des Gleichen ist es auch denkbar, das Übertragungselement und/oder das Führungselement aus einem Werkstoff herzustellen, in den ein Festschmierstoff, wie z. B. MoS₂, Teflon oder dergleichen, eingelagert ist, so dass aufgrund des teilweisen Auslösens des Festschmierstoffes während der Bewegung des Übertragungselements in dem Führungselement eine Schmierung und somit eine reduzierte Reibung erreicht wird.

Zusätzlich zu der Reduzierung der Reibung bzgl. des Führungselementes und/oder des Übertragungselementes kann auch im Bereich der Membran bzw. des Membrantellers die Reibung durch eine schmierende Beschichtung, wie z. B. eine Teflonschicht, reduziert werden. Dies verringert zum einen die aktuatorinterne Reibung, kann die Walkarbeit in der Membran verringern und demzufolge die Lebensdauer erhöhen.

Auch hinsichtlich des Federelements ist eine solche schmierende Beschichtung vorteilhaft vorzusehen, da die Feder aufgrund des großen Federweges ebenfalls maßgeblich zur Reibung im Gesamtsystem des Aktuators beiträgt. Somit kann auch im Bereich der Feder eine schmierende Beschichtung, mit z. B. Teflon, vorgesehen werden.

Insbesondere bei der Ausbildung von Längsnuten in dem Führungselement stehen zumindest bezüglich der Längsnuten der Gehäuseinnenraum mit der Umgebung in Verbindung und so kann durch die Längsnuten aus der Umgebung Schmutz in den Gehäuseinnenraum des Aktuators eintreten. Somit ist es nicht nur in diesem Fall vorteilhaft, das Führungselement außenseitig mit einer Schmutzschutzeinrichtung in Form von Dichtlamellen und/oder in Form von Rundbürsten auszustatten, so dass der Eintrag von Schmutz in den Gehäuseinnenraum zumindest reduziert bzw. vollständig verhindert werden kann. Zu diesem Zweck können Dichtlamellen oder Rundbürsten außenseitig an dem Führungselement angebracht sein, so dass an dem Übertragungselement anhaftende Schmutzpartikel durch eine solche Schmutzschutzeinrichtung am Eindringen in den Gehäuseinnenraum gehindert werden.

Zudem kann die Führungsbuchse zur Erhöhung der Steifigkeit der Führung und Reduzierung der Reibung als Sinterlager oder Gleitbuchse ausgeführt werden.

Ein solcher Aktuator kann in/an einer Ladeeinrichtung, insbesondere in/an einem Abgasturbolader zur Steuerung z. Bsp. einer variablen Turbinengeometrie oder eines Waste-Gate-Ventils eingesetzt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch einen pneumatischen Aktuator,
- Fig. 2: einen vergrößerten Ausschnitt der Fig. 1,
- Fig. 3: ein Führungselement mit mehreren Längsnuten,
- Fig. 4: ein Führungselement mit einer Ringnut,
- Fig. 5: ein Übertragungselement mit mehreren Längsnuten
- Fig. 6: ein Führungselement mit mehreren Dichtlamellen,
- Fig. 7: ein Führungselement mit einem Bürsteneinsatz.

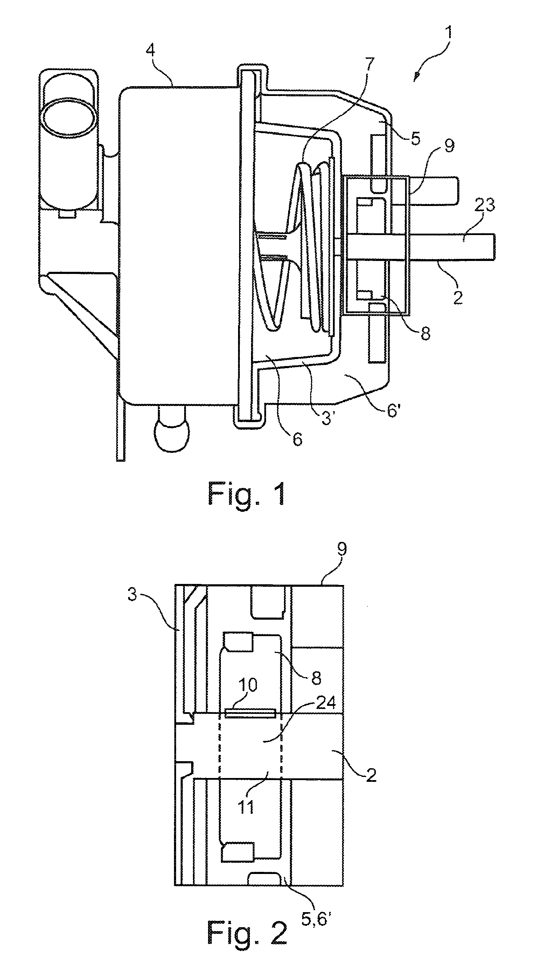

In Fig. 1 ist ein pneumatischer Aktuator 1 dargestellt, der mit einem als Lenkungs- oder Regelstange ausgebildeten Übertragungselement 2 ausgestattet ist. Das Übertragungselement 2 ist mit einer Membran 3 verbunden, die einen durch ein Gehäuse 4 druckdicht umschlossenen Innenraum 5 in zwei druckdicht gegeneinander abgetrennte Teilräume 6, 6' unterteilt. Durch einen Druckunterschied zwischen den Teilräumen 6, 6' wird die Membran 3 bewegt. Die Bewegung der Membran 3 kann zumindest in einer Richtung entgegen der Federkraft eines Federelements 7 stattfinden. Das Federelement 7 trägt dazu bei, dass bei zumindest einer vorbestimmten Druckdifferenz zwischen den Teilräumen 6, 6' eine genau definierte Ausgangsposition des Übertragungselements 2 von dem Aktuator 1 angefahren wird. In dieser Ausführungsform eines pneumatischen Aktuators 1 wird durch das Übertragungselement 2 eine Translationsbewegung entlang der Längsachse des Übertragungselements 2 ausgeführt.

Das Übertragungselement 2 ist in einem Führungselement 8 gelagert, wobei durch Einsatz des Führungselements 8 eine Übertragung von auf das Übertragungselement 2 quer zur Längsachse wirkenden Querkräften auf die Membran 3 verringert wird. Desweiteren wird durch das Führungselement 8 der Innenraum 5 des Aktuators 1 gegen Umwelteinflüsse abgedichtet und aufgrund der Führung des Übertragungselements 2 durch das Führungselement 8 ist zudem eine Positionserkennung durch einen in der Fig. 1 nicht dargestellten Sensor exakter durchführbar.

Ein Ausschnitt 9 der Fig. 1 ist in der Fig. 2 zur Erläuterung einer Führungslänge 10 dargestellt. Dabei ist die Führungslänge 10 diejenige Länge eines Bereichs 11 des Übertragungselements 2 mit dem das Übertragungselement 2 in dem Führungselement 8 angeordnet ist. Bei einer als Ringfläche ausgebildeten Innenoberfläche des Führungselements 8 entspricht die Führungslänge 10 der axialen Höhe der Ringfläche.

Um eine Reibung zwischen dem Übertragungselement 2 und dem Führungselement 8 zu verringern, weist eine dem Übertragungselement 2 zugewandte Innenoberfläche 13 des Führungselementes 8 und/oder eine dem Führungselement 8 zugewandte Außenoberfläche 19 des Übertragungselementes 2 zumindest eine Radialnut 12,15,17 auf. Unter dem Begriff Radialnut 12,15,17 sollen allgemein Längsnuten 12, Ringnuten 15 und Spiralnuten 17 verstanden werden, deren Nutentiefe sich in Radialrichtung erstreckt.

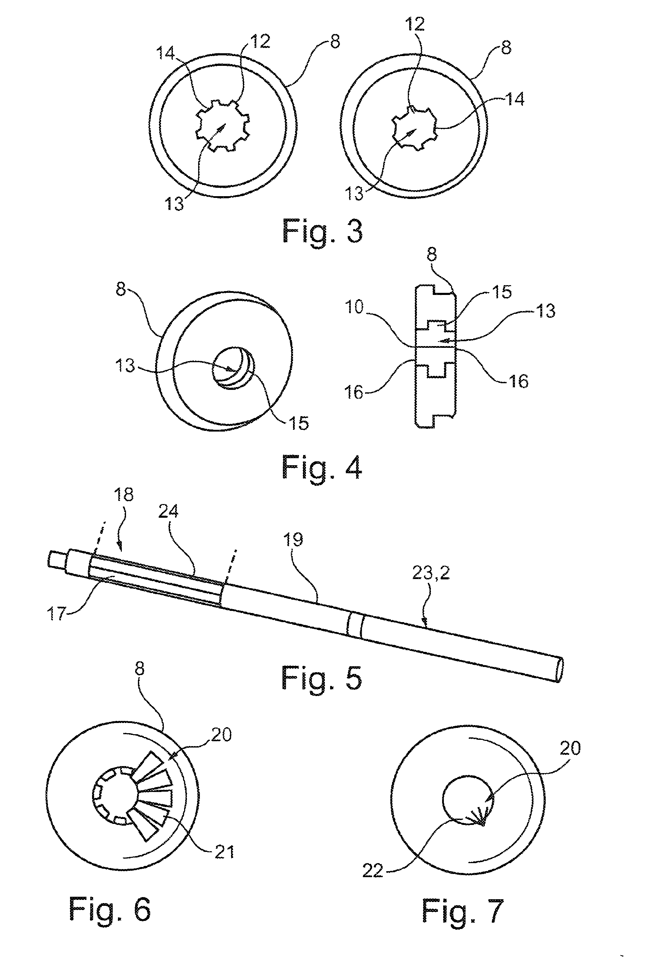

In Fig. 3 ist eine mögliche Ausführungsform eines mit mehreren Längsnuten 12 versehenen Führungselementes 8 dargestellt. Dabei sind die Längsnuten 12 in Umfangsrichtung regelmäßig verteilt, wobei in der dargestellten Ausführungsform bevorzugt acht Längsnuten 12 an einer Innenoberfläche 13 des Führungselements 8 angeordnet sind. Aufgrund der Ausbildung dieser Längsnuten 12 werden zwangsläufig auch entlang der Längsachse des Führungselements 8 verlaufende Längsstege ausgebildet.

Die in der Fig. 4 dargestellte bevorzugte Ausführungsform eines Führungselements 8, weist eine mittig an der Innenoberfläche 13 angeordnete Ringnut 15 auf. Aufgrund der Ringnut 15 wird demzufolge jeweils auch ein endständiger Ringsteg 16, 16' ausgebildet. Dadurch ist vorteilhaft die Führungslänge 10 bei verringerter Reibungsfläche gleichlang ausgebildet, wobei die Führungslänge 10 jeweils gegenüberliegend durch einen endständigen Ringsteg 16, 16' begrenzt wird. Dies hat vorteilhaft zur Folge, dass auf das Übertragungselement 2 wirkende Querkräfte weniger stark auf die Membran 3 übertragen werden, im Vergleich zu einer runden Ausbildung der Innenoberfläche 13 des Führungselementes 8.

Eine mögliche Ausführungsform eines mit mehreren Längsnuten 17 versehenen Übertragungselements 2 ist in Fig. 5 dargestellt. Dabei ist ein im Bereich 11 des Führungselements 8 angeordneter Bereich 18 des Übertragungselements 2 auf einer Außenoberfläche 19 des Übertragungselements 2 mit regelmäßig in Umfangsrichtung auf der Außenoberfläche 19 angeordneten Längsnuten 17 versehen. In einer bevorzugten Ausführungsform sind insgesamt acht Längsnuten 17 regelmäßig in Umfangsrichtung auf der Außenoberfläche 19 des Übertragungselements 2 angeordnet. Der Bereich 18 des Übertragungselements 2 ist dabei nicht ständig im Bereich 11 des Führungselements 8 angeordnet sondern kennzeichnet denjenigen Bereich des Übertragungselements 2 der innerhalb des Bereichs 11 des Führungselements 8 aufgrund seines Bewegungsspielraums angeordnet sein kann.

In anderen Ausführungsformen können jeweils am Übertragungselement 2 oder am Führungselement 8 ein bis mehrere Ringnuten und/oder ein bis mehrere Längsnuten angeordnet sein. Diese können jeweils einzeln an dem jeweiligen Element 2,8 ausgebildet sein oder an beiden Elementen 2,8 gleichzeitig. Ebenso ist eine Ausbildung von spiralförmigen, in Art eines Gewindes verlaufenden Spiralnuten an dem Übertragungselement 2 und/oder an dem Führungselement 8 denkbar.

Zusätzlich kann das Führungselement 8 mit einer Schmutzschutzeinrichtung 20 in Form von, wie in Fig. 6 gezeigt, Lamellen 21 oder, wie in Fig. 7 gezeigt, in Form von Bürstelementen 22 ausgestattet werden. Im Falle von Bürstelementen 22 ist es auch denkbar, das Führungselement 8 mit einer Rundbürste auszustatten. Diese Schmutzschutzeinrichtungen 20 sind vorzugsweise an der Seite des Führungselementes 8 anzuordnen, die in Einbaulage des Führungselementes 8 zur Umgebung des Aktuators 1 hin orientiert ist. Bewegt sich nun das Übertragungselement 2 in dem Führungselement 8 kann durch die Schmutzschutzeinrichtung 20 an dem Übertragungselement 2 anhaftender Schmutz abgestreift bzw. abgebürstet werden und somit ist der Eintrag von an dem Übertragungselement 2 anhaftenden Schmutz in den Innenraum 5 des Gehäuses 4 zumindest verringert, wenn nicht sogar gänzlich unterdrückt.

Die Hin- und Rückbewegung des Übertragungselementes 2 kann darüber hinaus durch eine reibungsreduzierende Beschichtung 24 erleichtert werden. So ist es möglich, eine Beschichtung 24 des als z. B. Regelstange 23 ausgebildeten Übertragungselementes 2 mit z. B. einer Teflonschicht, einer MoS₂-Schicht einer Chromschicht oder dergleichen zu versehen. Dabei können solche schmierenden Beschichtungen 24 sowohl auf dem gesamten Übertragungselement 2 als auch lediglich partiell im Bereich des Führungselementes 8 und in einem Hubbereich des Übertragungselements 2 während des Betriebs aufgetragen werden. Des Weiteren ist es denkbar, das Führungselement 8 im Gegensatz zu einer derzeit üblichen Ausbildung aus PPS vollständig oder zumindest im Führungsbereich aus Teflon herzustellen, was ebenso zu einer deutlichen Reduzierung der Reibung führt. Des Gleichen ist es auch denkbar, das Übertragungselement 2 und/oder das Führungselement 8 aus einem Werkstoff herzustellen, in den ein Festschmierstoff, wie z. B. MoS₂, Teflon oder dergleichen, eingelagert ist, so dass aufgrund des teilweisen Auslösens des Festschmierstoffes während der Bewegung des Übertragungselements 2 im Führungselement 8 eine Schmierung und somit eine reduzierte Reibung erreicht wird.

Zusätzlich zu der Reduzierung der Reibung bzgl. des Führungselementes 8 und/oder des Übertragungselementes 8 kann auch im Bereich der Membran 3 bzw. des Membrantellers die Reibung durch eine schmierende Beschichtung 24, wie z. B. eine Teflonschicht, reduziert werden. Auch hinsichtlich des Federelements 7 ist eine solche schmierende Beschichtung 24 vorteilhaft vorzusehen, da das Federelement 7 ebenfalls maßgeblich zur Reibung im Gesamtsystem des Aktuators 1 beiträgt.

## Patentansprüche

1. Aktuator (1), insbesondere pneumatischer Aktuator zur Regelung einer variablen Turbinengeometrie und/oder eines Wastegateventils eines Abgasturboladers, mit einem Übertragungselement (2) zur Übertragung eines mechanischen Regelsignals und einem das Übertragungselement (2) lagernden Führungselement (8),
**dadurch gekennzeichnet, dass**
eine dem Führungselement (8) zugewandte Außenoberfläche (19) des Übertragungselementes (2) zumindest eine Radialnut (17) aufweist, die in Axialrichtung des Übertragungselements (2) verläuft.

2. Aktuator nach einem der vorhergehenden Ansprüche,
**dadurch gekennzeichnet,**
**dass** die zumindest eine Radialnut (17) einen im Wesentlichen rechteckigen, dreieckigen oder trapezförmigen Querschnitt aufweist.

3. Aktuator nach Anspruch 1 oder 2,
**dadurch gekennzeichnet,**
**dass** insgesamt acht sich in Axialrichtung des Übertragungselements (2) erstreckende Radialnuten (17) vorgesehen sind.

4. Aktuator nach einem der vorhergehenden Ansprüche,
**dadurch gekennzeichnet,**
**dass** mehrere die Radialnuten (17) begrenzende Stege einen abgerundeten, einen trapezförmigen, einen rechteckigen oder einen spitz zulaufenden Endbereich aufweisen.

5. Ladeeinrichtung, insbesondere ein Abgasturbolader, mit einem Aktuator (1) nach einem der vorhergehenden Ansprüche, zur Steuerung einer variablen Turbinengeometrie oder eines Waste-Gate-Ventils.

## Claims

1. Actuator (1), in particular a pneumatic actuator for controlling a variable turbine geometry and/or a wastegate valve of a turbocharger, comprising a transmission element (2) for transmitting a mechanical control signal, and a guide element (8) supporting the transmission element (2),
**characterised in that**
an outer surface (19) of the transmission element (2) facing the guide element (8) has at least one radial groove (17) which extends in the axial direction of the transmission element (2).

2. Actuator according to the preceding claim,
**characterised in that**
the at least one radial groove (17) has a substantially rectangular, triangular or trapezoidal cross section.

3. Actuator according to either claim 1 or claim 2,
**characterised in that**,
in total, eight radial grooves (17) which extend in the axial direction of the transmission element (2) are provided.

4. Actuator according to any of the preceding claims,
**characterised in that**
a plurality of webs, which delimit the radial grooves (17), have an end region which is rounded, trapezoidal, rectangular, or tapers to a point.

5. Charging device, in particular a turbocharger, comprising an actuator (1) according to any of the preceding claims, for controlling a variable turbine geometry or a wastegate valve.

## Revendications

1. Actionneur (1), en particulier actionneur pneumatique, destiné à la régulation d'une géométrie de turbine variable et/ou d'une soupape wastegate d'un turbocompresseur à gaz d'échappement, avec un élément de transmission (2) pour la transmission d'un signal de régulation mécanique et avec un élément de guidage (8) supportant l'élément de transmission (2),
**caractérisé en ce**
**qu'**une surface extérieure (19) de l'élément de transmission (2) tournée vers l'élément de guidage (8) présente au moins une rainure radiale (17) qui s'étend dans la direction axiale de l'élément de transmission (2).

2. Actionneur selon l'une des revendications précédentes,
**caractérisé en ce que**
la rainure radiale (17) au moins au nombre de un présente une section transversale essentiellement rectangulaire, triangulaire ou trapézoïdale.

3. Actionneur selon la revendication 1 ou 2,
**caractérisé en ce que**,
au total, il est prévu huit rainures radiales (17) s'étendant dans la direction axiale de l'élément de transmission (2).

4. Actionneur selon l'une des revendications précédentes,
**caractérisé en ce que**
plusieurs nervures limitant les rainures radiales (17) présentent une zone d'extrémité arrondie, trapézoïdale, rectangulaire ou se terminant en pointe.

5. Dispositif de charge, en particulier un turbocompresseur à gaz d'échappement, avec un actionneur (1) selon l'une des revendications précédentes, pour la commande d'une géométrie de turbine variable et/ou d'une soupape wastegate.
